# FASCICULE DE BREVET EUROPEEN

(11) **EP 2 572 235 B1**
(45) Date de publication et mention de la délivrance du brevet: **27.09.2017**
(21) Numéro de dépôt: 11727211.2
(22) Date de dépôt: 16.05.2011
(51) Int. Cl.: G02C 7/08, G02C 7/10, B29D 11/00

(54) **DESIGN ET REALISATION D'UN COMPOSANT OPTIQUE TRANSPARENT A STRUCTURE CELLULAIRE**
DESIGN UND HERSTELLUNG EINER DURCHSICHTIGEN OPTISCHEN KOMPONENTE MIT ZELLULÄRER STRUKTUR
DESIGN AND PRODUCTION OF A TRANSPARENT OPTICAL COMPONENT WITH A CELLULAR STRUCTURE

(30) Priorité: 21.05.2010 FR 1053977
(43) Date de publication de la demande: 27.03.2013
(73) Titulaire: Essilor International (Compagnie Générale d'Optique), 94220 Charenton-le-Pont (FR); Centre National de la Recherche Scientifique (C.N.R.S.), 75016 Paris (FR)
(72) Inventeur: BALLET, Jérôme, F-94220 Charenton-le- Pont (FR); BENOIT, Céline, F-94220 Charenton-le-pont (FR); BOVET, Christian, F-94220 Charenton-le-pont (FR); CANO, Jean-Paul, F-94220 Charenton-le-pont (FR); CHAVEL, Pierre, F-91403 Orsay (FR); GOUDAIL, François, F-91403 Orsay (FR)
(74) Mandataire: Cabinet Plasseraud
(86) Numéro de dépôt international: PCT/FR2011/051089
(87) Numéro de publication internationale: WO 2011/144852

(56) Documents cités:
- WO-A1-97/25256
- WO-A1-2007/148807
- WO-A2-2007/121486
- FR-A1- 2 888 954
- US-A1- 2009 168 414

## Description

La présente invention concerne la réalisation d'un composant optique transparent, qui comporte un ensemble de cellules séparées par des parois. Elle peut s'appliquer à la réalisation d'une lentille optique, et notamment d'un verre de lunettes ophtalmiques.

Il est connu, notamment du document FR 2 888 954, de réaliser un composant optique sous la forme d'un substrat transparent qui porte, sur l'une au moins de ses faces, un ensemble de cellules juxtaposées qui recouvre au moins en partie cette face. Des substances qui possèdent des propriétés optiques déterminées sont contenues dans les cellules, et coopèrent pour conférer au composant optique des caractéristiques optiques recherchées pour une application particulière. Par exemple, des substances transparentes qui ont des indices de réfraction différents peuvent être réparties dans les cellules, de sorte que le composant obtenu constitue une ébauche de verre correcteur d'amétropie. Le verre est alors obtenu par découpage du composant optique selon un contour qui correspond à une monture de lunettes d'un porteur du verre. Après que les cellules ont été fermées et grâce à la rétention des substances dans les cellules qui est ainsi obtenue, le découpage du composant optique ne provoque pas de perte de substances. Ainsi, les caractéristiques optiques initiales de l'ébauche du verre sont conservées pour le verre final découpé.

De tels composants optiques transparents à cellules sont particulièrement intéressants, car un grand nombre de modèles différents peuvent être obtenus à partir d'un même substrat recouvert de cellules, en variant la ou les substance(s) à propriété(s) optique(s) qui est (sont) placée(s) dans les cellules. La réalisation des composants optiques est alors particulièrement économique, puisque les substrats munis de cellules peuvent être fabriqués en grande série dans une usine. Ces substrats reçoivent ensuite à l'intérieur des cellules une ou plusieurs substance(s) à propriété(s) optique(s), qui sont choisies en fonction des caractéristiques optiques recherchées pour répondre à une demande de client. Une personnalisation du composant optique pour chaque client est ainsi réalisée, qui peut être effectuée en aval dans la chaîne de distribution des composants. La logistique de fabrication et de distribution est alors simplifiée et souple, ce qui contribue à une réduction supplémentaire du prix unitaire de chaque composant optique terminé et fourni à un client. Ces avantages sont particulièrement importants dans le domaine ophtalmique, où les verres de lunettes, les lentilles de contact ou les implants oculaires doivent correspondre à des prescriptions individuelles qui dépendent de la vue de chaque porteur.

Au sens de l'invention, on entend qu'un composant optique est transparent lorsqu'un objet qui est situé d'un premier côté du composant optique peut être regardé par un observateur qui est situé lui-même de l'autre côté du composant optique, sans perte significative de contraste. L'objet et l'observateur sont chacun situés à distance du composant optique. Autrement dit, une image de l'objet est formée à travers le composant optique sans perte de qualité de perception visuelle. Cette définition du terme transparent est applicable, au sens de l'invention, à l'ensemble des objets qui sont ainsi qualifiés dans la présente description.

Des cellules voisines à la surface du composant optique sont séparées par des parois. Ces parois de séparation évitent que les substances qui sont contenues dans les cellules se mélangent progressivement au cours de l'utilisation du composant optique. Elles assurent ainsi une durée de vie quasiment illimitée au composant optique, ou à un élément optique qui est obtenu à partir de celui-ci.

Or, étant donné que chaque paroi possède une épaisseur limitée, notamment comprise entre 0,1 µm (micromètre) et 5 µm, parallèlement à la surface du composant optique, elle provoque une diffraction microscopique de la lumière qui arrive sur le composant à l'endroit de cette paroi. Si les parois forment un réseau périodique à la surface du composant optique, les fractions d'un flux lumineux incident qui sont diffractées respectivement par toutes les parois sont cumulées par effet d'interférence constructive dans certaines directions isolées. Une diffraction macroscopique en résulte, qui produit une concentration de la lumière transmise ou réfléchie par le composant dans quelques directions d'émergence, qui sont séparées les unes des autres. Le composant optique apparaît alors sombre puis subitement lumineux à un observateur, lorsque son orientation par rapport à cet observateur varie et que la direction d'observation vient à coïncider avec une direction de diffraction. Autrement dit, un éclat lumineux apparaît transitoirement à l'observateur, qui provient de la surface du composant optique. Un tel scintillement n'est pas esthétique et, en particulier, n'est pas acceptable dans le domaine ophtalmique.

On connaît, notamment du document WO 2007/010414, des composants optiques transparents à structures cellulaires dont les parois de séparation entre les cellules sont courbes. Le phénomène de diffraction macroscopique est ainsi limité. En effet, une paroi courbe diffracte individuellement la lumière dans une multiplicité de plans qui sont décalés angulairement, si bien que la concentration d'intensité lumineuse qui résulte de l'interférence entre les contributions de diffraction respectives de toutes les parois est réduite. On réduit ainsi considérablement l'apparition d'éclats lumineux dans des directions isolées. Cependant, la réalisation de parois courbes est plus compliquée que celle de parois rectilignes, et le remplissage des cellules au niveau des jonctions entre plusieurs parois courbes présente des difficultés supplémentaires.

On connaît également d'utiliser des composants optiques transparents à structure cellulaire, dont les cellules présentent une géométrie aléatoire et une distribution aléatoire. A nouveau, la déstructuration dans l'agencement des parois intercellulaires permet d'éviter que la lumière qui est diffractée par l'ensemble des parois soit concentrée dans des directions isolées. Cependant, l'optimisation d'un tel agencement des parois intercellulaires requiert une succession d'étapes de recuits simulés pour aboutir à une distribution de la lumière diffractée qui soit suffisamment étalée angulairement. Or ces étapes de recuits simulés nécessitent des calculs qui sont particulièrement longs.

Par ailleurs, le document WO 2007/121486 divulgue d'utiliser un pavage de Voronoï pour former la surface inférieure d'une lentille de sortie d'un élément d'éclairage à base de diodes électroluminescentes (LED).

Un but de la présente invention consiste alors à supprimer les éclats lumineux de diffraction d'un composant optique à cellules qui sont séparées par des parois, avec une mise en oeuvre industrielle qui soit assez simple et rapide.

Pour cela, l'invention propose un procédé de réalisation d'un composant optique transparent à structure cellulaire, ce composant comprenant un réseau de parois qui forme un ensemble de cellules juxtaposées parallèlement à une surface du composant entre ses deux côtés, et chaque paroi s'étendant perpendiculairement à la surface du composant en séparant deux cellules adjacentes, avec une épaisseur de paroi qui est comprise entre 0,1 µm et 5 µm parallèlement à la surface du composant, le procédé comprenant les étapes suivantes :
/1/ déterminer un ensemble de points dans la surface du composant avec une répartition irrégulière de ces points dans la surface, chaque point étant destiné à former un centre d'une des cellules ; et
/2/ déterminer une position et une orientation de chaque paroi parallèlement à la surface du composant, de sorte que le réseau des parois forme une partition de Voronoï de la surface du composant, la partition de Voronoï étant constituée de polygones construits à partir des centres des cellules, et de sorte que l'ensemble du réseau des parois contienne au moins cinq des parois qui ont des orientations respectives différentes parallèlement à la surface du composant.

On entend par répartition irrégulière de points une répartition qui n'est pas constituée d'un motif répété périodiquement.

A l'étape /2/, la partition de Voronoï de la surface du composant est obtenue en traçant les médiatrices de tous les couples de points voisins dans l'ensemble des points qui ont été déterminés à l'étape /1/. Une paroi est alors placée sur la médiatrice de chaque couple de points voisins, entre deux intersections de cette médiatrice avec d'autres médiatrices relatives à l'un ou l'autre des deux points du couple considéré, et à un autre point voisin externe à ce couple. Chaque cellule est alors constituée de tous les points qui sont plus proches du centre de cette cellule que de n'importe quel autre centre de cellule. Une telle partition de la surface du composant peut être générée informatiquement de façon rapide, sans nécessiter des moyens de calcul qui soient complexes.

Une telle partition de Voronoï, lorsqu'elle est appliquée à la répartition irrégulière des centres de cellules qui est déterminée à l'étape /1/, aboutit à une répartition aléatoire des parois intercellulaires qui atténue efficacement toute concentration de lumière qui est diffractée par l'ensemble des parois.

Dans le but d'augmenter la transparence du composant optique, l'ensemble des points qui forment les centres des cellules peut avantageusement être déterminé à l'étape /1/ de sorte qu'une caractéristique d'une distribution angulaire de lumière diffusée par le composant, avec les parois telles qu'elles sont déterminées à l'étape /2/, soit minimale ou inférieure à un seuil prédéterminé. Pour cela, la lumière diffusée est produite à partir d'un faisceau parallèle de lumière qui éclaire le composant.

On entend par caractéristique d'une distribution angulaire de lumière diffusée une grandeur physique dont la valeur dépend de la direction angulaire par rapport au composant optique. Autrement dit, la caractéristique en question, lorsqu'elle est mesurée en un endroit donné du composant, dépend de l'angle entre une première droite qui passe par une source de la lumière et l'endroit considéré du composant, et une deuxième droite qui passe par cet endroit du composant et un détecteur lumineux.

La minimisation d'une telle caractéristique permet avantageusement d'augmenter le niveau de transparence du composant, par rapport à un niveau initial. Le niveau de transparence obtenu peut aussi être comparé à un seuil prédéterminé. Un tel seuil peut alors constituer une valeur maximale qui est acceptée pour la caractéristique de distribution angulaire de la lumière diffusée.

Dans un mode de mise en oeuvre préféré de la présente invention, la caractéristique de distribution angulaire de la lumière diffusée peut être une amplitude d'un pic de diffraction d'ordre un. Un tel choix est particulièrement judicieux dans la mesure où le pic de diffraction d'ordre 1 est en général plus important que les pics de diffraction d'ordres supérieurs. En d'autres termes, l'amplitude du pic de diffraction d'ordre un est un critère adapté pour évaluer la transparence du composant optique.

Dans un premier type de mise en oeuvre de la présente invention, les points qui sont destinés à former les centres des cellules peuvent être directement déterminés à l'étape /1/ avec une répartition irrégulière dans la surface du composant.

Dans un deuxième type de mise en oeuvre de la présente invention, l'étape /1/ peut elle-même comprendre les sous-étapes suivantes :
/1-1/ sélectionner une première répartition irrégulière dans la surface du composant pour les points qui sont destinés à former les centres des cellules ; puis
/1-2/ déplacer au moins un de ces points par rapport à une position initiale de ce point dans la première répartition irrégulière, de façon à obtenir la répartition irrégulière pour l'ensemble des points à laquelle est appliquée l'étape /2/.

La sous-étape supplémentaire /1-2/ permet de rendre la répartition des centres des cellules encore plus irrégulière par rapport au premier type de mise en oeuvre. La réduction ou la suppression de tout éclat lumineux qui pourrait être produit par le composant optique est alors encore plus efficace.

Dans ces deux types de mise en oeuvre de l'invention, une densité de la répartition irrégulière des points dans la surface du composant, telle que cette répartition est sélectionnée initialement, peut dépendre d'un gradient d'une fonction optique qui est destinée à être réalisée par le composant. La structure cellulaire qui est finalement obtenue après application du procédé de l'invention est alors elle-même adaptée à la fonction optique du composant.

Un troisième type de mise en oeuvre de l'invention peut être obtenu en remplaçant la répartition irrégulière des points qui sont destinés à former les centres des cellules, à la sous-étape /1-1/, par une répartition régulière. La sous-étape /1-1/ est alors très simple à exécuter informatiquement, et la sous-étape /1-2/ assure ensuite que la partition de la surface du composant en cellules, qui est finalement obtenue, soit assez irrégulière pour obtenir un niveau suffisant pour la transparence du composant.

De préférence, un vecteur de translation de chaque point qui est déplacé à la sous-étape /1-2/ peut être déterminé d'une façon aléatoire ou pseudo aléatoire, quant à une orientation et une longueur de ce vecteur de translation parallèlement à la surface du composant, sa longueur étant en outre limitée par la surface du composant.

On entend par détermination pseudo-aléatoire une méthode mettant en oeuvre informatiquement des algorithmes qui simulent une détermination aléatoire.

Le procédé peut comprendre en outre un remplissage de chaque cellule avec une substance transparente qui possède un indice de réfraction variable, de sorte que certaines au moins des cellules produisent des déphasages variables pour des rayons lumineux qui traversent ces cellules entre les deux côtés opposés du composant. Par ailleurs, les substances qui sont contenues dans des cellules différentes peuvent aussi présenter des absorptions lumineuses variables.

Enfin, l'invention peut être appliquée à la réalisation de divers composants optiques ou ophtalmiques. En particulier, le composant optique peut comprendre une lentille, ou un film qui est destiné à être appliqué sur un substrat transparent pour former une lentille. Plus particulièrement, la lentille peut être un verre de lunettes ophtalmiques. Pour ces applications, le niveau de transparence du composant optique est une caractéristique essentielle du produit final. En outre, pour les applications ophtalmiques, la suppression du scintillement du composant pour un observateur externe permet de satisfaire les exigences esthétiques qui sont propres au domaine ophtalmique.

D'autres particularités et avantages de la présente invention apparaîtront dans la description ci-après d'exemples de mise en oeuvre non limitatifs, en référence aux dessins annexés, dans lesquels :
- la figure 1 montre un composant optique transparent auquel l'invention peut être appliquée ;
- la figure 2 illustre une partie d'une structure cellulaire réalisée selon la présente invention ;
- la figure 3 est un diagramme synoptique des étapes de procédé d'une mise en oeuvre particulière de la présente invention ;
- la figure 4a reproduit une structure cellulaire d'un composant optique réalisé selon la présente invention ;
- la figure 4b reproduit un diagramme de diffusion lumineuse établi pour le composant optique de la figure 4a ; et
- les figures 5a et 5b correspondent respectivement aux figures 4a et 4b pour une autre mise en oeuvre de l'invention.

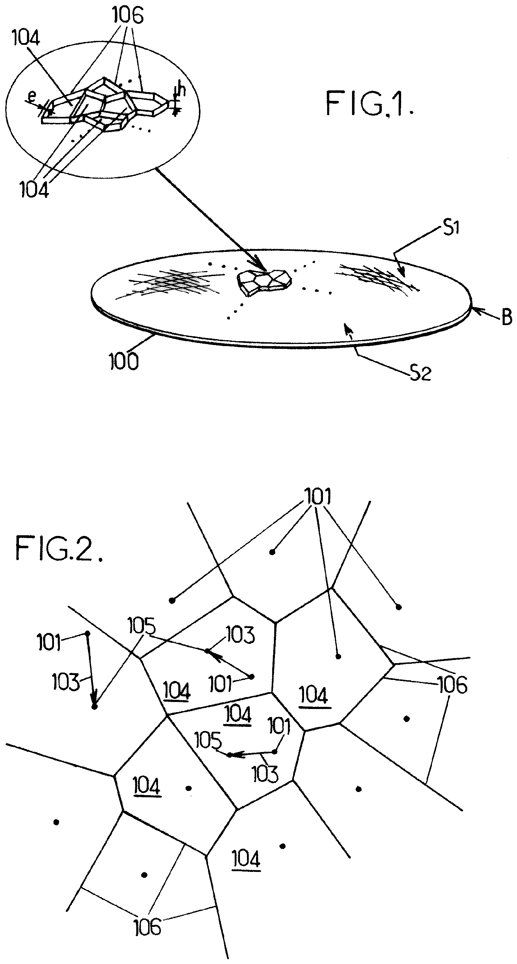

Pour raison de clarté des figures 1 et 2, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

Conformément à la figure 1, un composant optique 100 peut être une lentille ophtalmique avec une face antérieure S₁ et une face postérieure S₂. Dans ce cas, la face S₁ est convexe et la face S₂ est concave. L'une des deux faces S₁ ou S₂, par exemple la face S₁, porte un réseau de parois 106 qui s'étendent chacune perpendiculairement à la face S₁, avec une hauteur de paroi h qui peut être identique pour toutes les parois. Les parois 106 peuvent être réalisées directement sur un substrat de base de la lentille 100, ou bien sur un film transparent qui est rapporté sur le substrat de base. Les parois 106 divisent la face S₁ en un ensemble de cellules 104, de sorte que deux cellules 104 qui sont voisines sont séparées l'une de l'autre par une paroi 106.

Les faces S₁ et S₂ sont limitées par un bord périphérique B, qui peut être circulaire avec un diamètre de 65 mm (millimètre) lorsque la lentille 100 est destinée à être détourée pour former un verre de lunettes à assembler dans une monture ophtalmique.

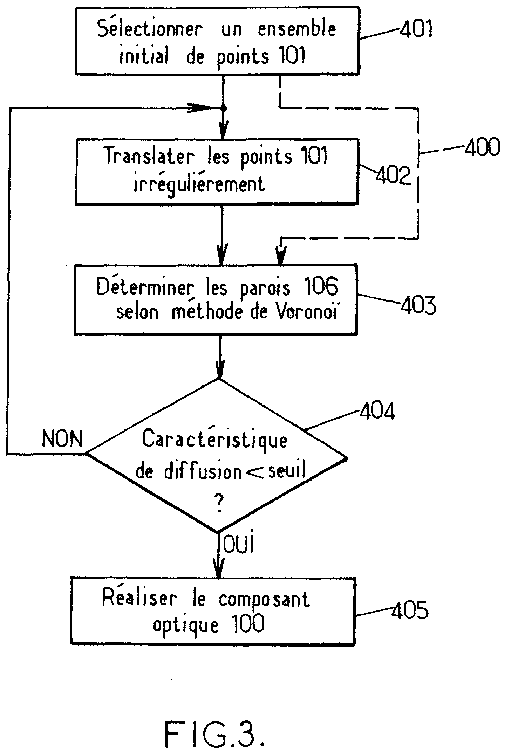

Chaque paroi 106 possède une épaisseur e qui peut être comprise entre 0,1 µm (micromètre) et 5 µm parallèlement à la face S₁. A cause de cette épaisseur e, la lumière visible qui traverse la lentille 100 entre les faces S₁ et S₂, à l'endroit d'une quelconque des parois 106, est diffractée. Cette diffraction, lorsqu'elle est cumulée pour toutes les parois 106, peut aboutir à une concentration de la lumière qui est transmise ou réfléchie par la lentille 100, dans des directions séparées. Tel est le cas, notamment, lorsque le réseau des parois 106 est régulier ou périodique. Pour éviter une telle concentration angulaire de la lumière qui est transmise ou réfléchie, l'invention telle qu'elle est décrite en référence aux figures 2 et 3 concerne la détermination d'un réseau irrégulier pour les parois 106 sur la face S₁ de la lentille 100.

Un ensemble de points 101 est d'abord déterminé sur la face S₁ de la lentille 100, avec une répartition qui est irrégulière dans cette face. Ainsi, la répartition des points 101 ne reproduit aucun motif élémentaire tel qu'un carré, un rectangle, un triangle ou un hexagone, par translation sur la face S₁. Plusieurs méthodes peuvent être utilisées alternativement pour obtenir une telle répartition irrégulière des points 101.

Selon une première méthode, les points 101 sont sélectionnés initialement avec une répartition qui est déjà irrégulière lors de l'étape 401 de la figure 3. Dans ce cas, le procédé peut être directement poursuivi par l'étape 403, selon l'enchaînement qui est désigné par la référence 400.

Selon une seconde méthode, les points 101 sont sélectionnés initialement lors de l'étape 401 avec une répartition qui peut être quelconque dans la face S₁, puis sont translatés irrégulièrement sur la face S₁ lors d'une étape séparée 402. Cette étape séparée 402 assure que la répartition finale des points 101 soit irrégulière, quelque soit la répartition initiale des points 101 qui est adoptée à l'étape 401. Dans cette seconde méthode, les points 101 peuvent alors être sélectionnés initialement, à l'étape 401, selon une répartition qui est régulière, ou qui est déjà irrégulière, aléatoire ou pseudo-aléatoire. En particulier, lorsqu'elle est initialement régulière à l'issue de l'étape 401, la répartition des points 101 peut posséder un motif de maille qui est carré, rectangulaire, triangulaire équilatéral ou hexagonal.

A l'étape 402, des vecteurs de translation 103 sont déterminés de manière aléatoire ou pseudo-aléatoire, et sont appliqués à une partie au moins des points 101. Ceux des points 101 qui sont ainsi translatés peuvent eux-mêmes être sélectionnés de manière aléatoire, ou bien tous les points 101 peuvent être ainsi translatés. Les points 101 qui sont translatés sont référencés 105 sur la figure 2. Toutefois, pour raison de clarté, ces points 105 qui résultent des translations de l'étape 402 sont désignés ultérieurement de nouveau par la référence 101, puisqu'ils sont destinés à remplacer pour la suite du procédé les points 101 tels qu'ils résultaient de l'étape 401. Evidemment, chaque vecteur de translation 103 possède une longueur limitée de sorte que le point 105 soit encore à l'intérieur de la face S₁, elle-même limitée par son bord périphérique B.

Lorsque l'étape 402 est appliquée à une répartition initiale régulière des points 101, les vecteurs de translation 103 peuvent être déterminés pour avoir chacun une longueur maximale qui est comprise entre 0,5 et 2,5 fois un paramètre de maille de la répartition initiale régulière des points 101. Ainsi, l'étape 402 introduit une irrégularité dans la répartition des points 101, tout en limitant des variations de densité locale pour ces points dans la face S₁.

Pour les deux méthodes correspondant aux enchaînements des références 401 puis 400 pour la première méthode, ou des étapes 401 puis 402 pour la seconde méthode, les points 101 peuvent être sélectionnés initialement à l'étape 401 avec une densité locale qui dépend d'un gradient d'une fonction optique de la lentille 100. En effet, une densité supérieure pour les cellules 104 est plus adaptée pour réaliser des variations importantes d'une fonction qui varie de façon discrète entre des cellules 104 voisines, en simulant une variation continue de cette fonction. Une telle fonction peut être, par exemple, un niveau d'absorption lumineuse de la lentille 100, un indice de réfraction lumineuse d'une couche constituée par l'ensemble de cellules, etc.

Lors de l'étape 403, on détermine les médiatrices des couples de points 101 qui sont voisins. Une cellule est ainsi construite pour chaque point 101, qui contient ce point 101 et qui est la plus petite portion de la face S₁ délimitée par ces médiatrices. Le partitionnement de la face S₁ qui est ainsi réalisé correspond à une partition de Voronoï en cellules séparées 104. Les points 101 sont chacun le centre d'une cellule 104. L'irrégularité de la répartition des points 101, à l'issue de l'étape 401 ou de l'étape 402, assure que les positions et orientations des parois 106 soient irrégulières. En particulier, le réseau des parois 106 contient au moins cinq parois qui ont des orientations différentes, parallèlement à la face S₁. De cette façon, le réseau des parois 106 est suffisamment irrégulier pour éviter l'apparition d'interférences constructives qui seraient produites par la diffraction de la lumière par les parois 106, et qui seraient suffisantes pour qu'un observateur mobile perçoive un scintillement de la lentille 100.

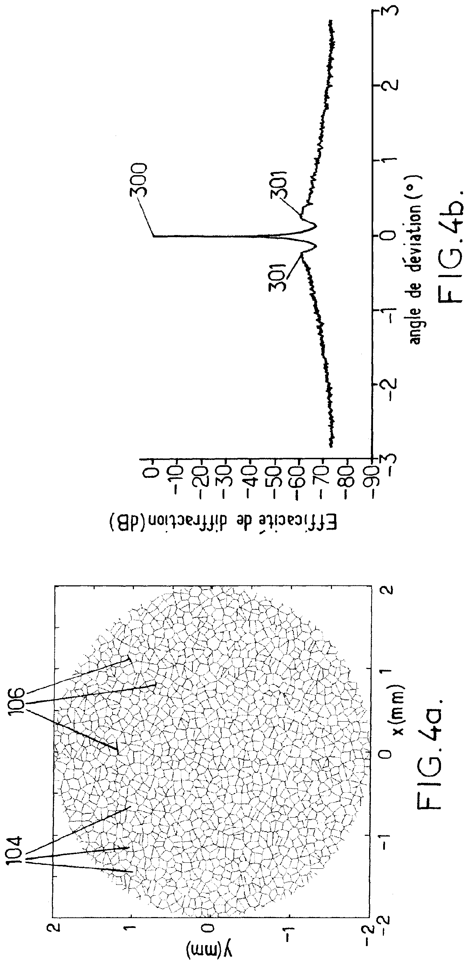

La figure 4a reproduit un réseau de parois 106 qui a été déterminé de la façon qui vient d'être décrite, à partir d'une répartition initiale carrée des points 101 et en limitant la longueur des vecteurs de translation 103 à 1,27 fois le paramètre de maille du réseau carré. Le paramètre de maille carrée du réseau initial des points 101 a été pris égal à 100 µm, et toutes les parois 106 ont une épaisseur de 5 µm. x et y désignent deux axes perpendiculaires par rapport auxquels est repéré chaque point de la face S₁. Les coordonnées des axes x et y sont exprimées en millimètres (mm).

La figure 4b reproduit un diagramme de diffraction de la lentille 100 qui correspond à la figure 4a. L'axe d'abscisse est la déviation angulaire, exprimée en degrés (°), d'un faisceau de lumière parallèle q ui est envoyé à travers la lentille 100. L'axe des ordonnées repère l'efficacité de diffraction de l'ensemble de la lentille 100, exprimée en décibels (dB) pour chaque valeur de déviation. Cette efficacité de diffraction est égale à l'intensité de la lumière diffractée selon une valeur particulière de l'angle de déviation, divisée par l'intensité du faisceau incident de la lumière qui est dirigé sur la lentille 100. Le pic central 300 correspond à la transmission à travers la lentille 100 sans déviation par rapport à la direction incidente du faisceau. Les deux pics latéraux 301 correspondent à la déviation angulaire de diffraction d'ordre un.

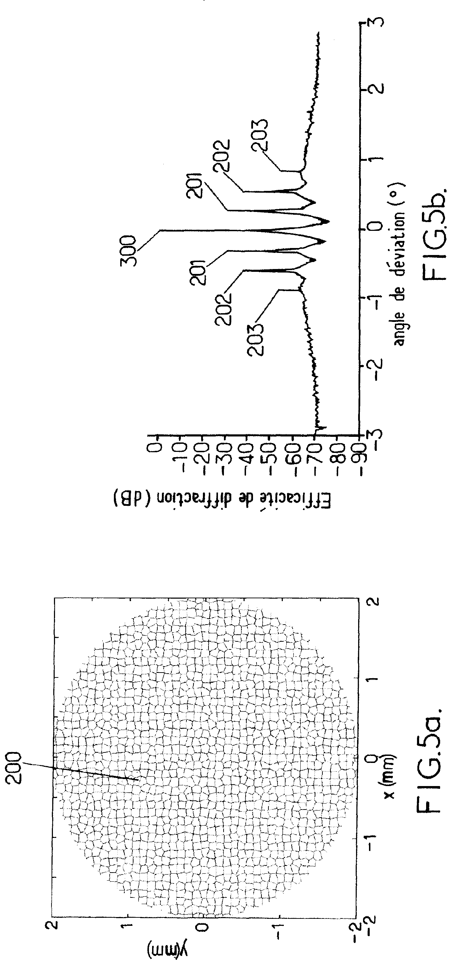

A titre de comparaison, les figures 5a et 5b correspondent respectivement aux figures 4a et 4b, en limitant la longueur des vecteurs de translation 103 à 0,5 fois le paramètre de maille du réseau carré. Pour ces figures 5a et 5b, le paramètre de maille du réseau initial carré des points 101 est encore égal à 100 µm, et toutes les parois 106 ont encore une épaisseur de 5 µm.

La figure 5b montre un ensemble de pics de diffraction qui comprend le pic de diffraction d'ordre zéro qui est encore référencé 300, deux pics de diffraction d'ordre un qui sont référencés 201, deux pics de diffraction d'ordre deux qui sont référencés 202, et deux pics de diffraction d'ordre trois qui sont référencés 203. Les pics de diffraction d'ordre supérieur à trois ne sont pas visibles. Les pics 201, 202 et 203 sont présentés par paires, pour raison de symétrie.

En comparant les figures 4b et 5b, il apparaît que l'augmentation de la longueur maximale des vecteurs de translation 103 fait disparaître les pics de diffraction d'ordre deux et trois, et atténue le pic de diffraction d'ordre un. L'amplitude des pics 201 et 301, correspondant à l'ordre un de diffraction, peut donc être prise comme un indicateur de l'amélioration de la transparence de la lentille 100, qui est procurée par l'invention.

Lors d'une étape 404 (figure 3), cette amplitude de diffraction d'ordre un peut être comparée à un seuil prédéterminé. Si elle est encore supérieure à ce seuil, les étapes 402 et 403 du procédé peuvent être réitérées, soit en augmentant la longueur maximale des vecteurs de translation 103, soit en appliquant une nouvelle exécution de l'étape 402 à partir des points 101 et 105 tels qu'ils résultent de l'exécution précédente de l'étape 402.

Lorsque l'amplitude des pics de diffraction d'ordre un devient inférieure au seuil prédéterminé, le réseau des parois 106 qui est alors déterminé est définitif, et la lentille 100 peut être réalisée à l'étape 405, avec les parois 106 qui sont disposées conformément à ce réseau.

Un autre indicateur de l'amélioration de la transparence de la lentille 100 qui est procurée par l'invention pourrait être la profondeur du minimum de l'efficacité de diffraction, entre les pics d'ordres zéro et un.

Les cellules 104 qui sont délimitées par les parois 106 peuvent être remplies d'une substance optique, conformément à un niveau de remplissage individuel qui correspond à la valeur de la fonction optique de la lentille 100 au point 101 qui constitue le centre de chaque cellule 104. La substance optique de remplissage peut elle-même varier entre des cellules 104 qui sont différentes. Par exemple, chaque cellule 104 peut être remplie avec une substance transparente qui possède un indice de réfraction variable, de sorte que les cellules 104 produisent des déphasages variables pour des rayons lumineux qui les traversent entre les deux faces S₁ et S₂ de la lentille 100. Le remplissage de chaque cellule 104 peut être réalisé conformément à une valeur cible du déphasage qui a été déterminée pour le point 101 qui en constitue le centre. En particulier, il est ainsi possible de conférer à la lentille 100 une puissance optique complémentaire, en plus d'une puissance optique initiale qui serait déterminée par une différence entre les courbures respectives des faces S₁ et S₂.

## Revendications

1. Procédé de réalisation d'un composant optique transparent (100) à structure cellulaire, adapté pour procurer une vision d'un objet situé d'un premier côté du composant et à une première distance dudit composant, à un utilisateur situé d'un second côté du composant opposé au premier côté et à une seconde distance dudit composant, le composant comprenant un réseau de parois (106) formant un ensemble de cellules (104) juxtaposées parallèlement à une surface (S₁) du composant, entre les premier et second côtés, et chaque paroi s'étendant perpendiculairement à la surface du composant en séparant deux cellules adjacentes, avec une épaisseur de paroi comprise entre 0,1 µm et 5 µm parallèlement à la surface du composant, le procédé comprenant l'étape suivante :
/1/déterminer (401, 402) un ensemble de points (101, 105) dans la surface (S₁) du composant (100) avec une répartition irrégulière des dits points dans ladite surface, chaque point étant destiné à former un centre d'une des cellules (104) ;
et étant **caractérisé en ce qu'**il comprend en outre l'étape supplémentaire :
/2/ déterminer (403) une position et une orientation de chaque paroi (106) parallèlement à la surface (S₁) du composant (100), de sorte que le réseau des parois forme une partition de Voronoï de ladite surface du composant, ladite partition de Voronoï étant constituée de polygones construits à partir des centres des cellules (104), et de sorte que ledit réseau de parois contienne au moins cinq parois (106) qui ont des orientations respectives différentes parallèlement à la surface du composant.

2. Procédé selon la revendication 1, suivant lequel l'ensemble des points (101, 105) formant les centres des cellules (104) est déterminé à l'étape /1/ de sorte qu'une caractéristique d'une distribution angulaire de lumière diffusée par le composant (100), avec les parois (106) déterminées à l'étape /2/, soit minimale ou inférieure à un seuil prédéterminé, ladite lumière diffusée étant produite à partir d'un faisceau parallèle de lumière éclairant le composant.

3. Procédé selon la revendication 2, suivant lequel la caractéristique de distribution angulaire de lumière diffusée est une amplitude d'un pic de diffraction d'ordre un (201, 301).

4. Procédé selon la revendication 2 ou 3, suivant lequel les points (101) destinés à former les centres des cellules (104) sont directement déterminés à l'étape /1/ avec une répartition irrégulière dans la surface (S₁) du composant (100).

5. Procédé selon la revendication 4, suivant lequel une densité de la répartition irrégulière des points (101) dans la surface (S₁) du composant (100) dépend d'un gradient d'une fonction optique destinée à être réalisée par le composant.

6. Procédé selon la revendication 2 ou 3, suivant lequel l'étape /1/ comprend les sous-étapes suivantes :
/1-1 / sélectionner (401) une première répartition irrégulière dans la surface (S₁) du composant (100) pour les points (101) destinés à former les centres des cellules (104) ; puis
/1-2/ déplacer (402) au moins un des points (101) destiné à former le centre d'une des cellules (104) par rapport à une position initiale dudit point dans la première répartition irrégulière, de façon à obtenir la répartition irrégulière pour l'ensemble des points (105) à laquelle est appliquée l'étape /2/.

7. Procédé selon la revendication 6, suivant lequel une densité de la première répartition irrégulière des points (101) dans la surface (S₁) du composant (100), sélectionnée à la sous-étape /1-1/, dépend d'un gradient d'une fonction optique destinée à être réalisée par le composant.

8. Procédé selon la revendication 2 ou 3, suivant lequel l'étape /1/ comprend les sous-étapes suivantes :
/1-1/ sélectionner (401) une répartition régulière dans la surface (S₁) du composant (100) pour les points (101) destinés à former les centres des cellules (104) ; puis
/1-2/ déplacer (402) au moins un des points (101) destiné à former le centre d'une des cellules (104) par rapport à une position initiale dudit point dans la répartition régulière, de façon à obtenir la répartition irrégulière pour l'ensemble des points (105) à laquelle est appliquée l'étape /2/.

9. Procédé selon la revendication 8, suivant lequel la répartition régulière des points (101) dans la surface (S₁) du composant (100), sélectionnée à la sous-étape /1-1/, possède un motif de maille choisi parmi un motif carré, rectangulaire, triangulaire équilatéral et hexagonal.

10. Procédé selon la revendication 8 ou 9, suivant lequel une longueur maximale d'un vecteur de translation (103) de chaque point (101) qui est déplacé à la sous-étape /1-2/ est comprise entre 0,5 et 2,5 fois un paramètre de maille de la répartition régulière sélectionnée à la sous-étape /1-1/.

11. Procédé selon la revendication 6 ou 8, suivant lequel un vecteur de translation (103) de chaque point (101) qui est déplacé à la sous-étape /1-2/ est déterminé d'une façon aléatoire ou pseudo aléatoire, quant à une orientation et une longueur du vecteur de translation parallèlement à la surface (S₁) du composant (100), la longueur dudit vecteur de translation étant en outre limitée par ladite surface du composant.

12. Procédé selon l'une quelconque des revendications précédentes, comprenant en outre un remplissage de chaque cellule (104) avec une substance transparente ayant un indice de réfraction variable, de sorte que certaines au moins des cellules produisent des déphasages variables pour des rayons lumineux qui traversent les dites cellules entre le premier et le second côté du composant (100).

13. Procédé selon la revendication 12, suivant lequel le remplissage de chaque cellule (104) est réalisé de façon que le déphasage produit par ladite cellule corresponde à une valeur cible dudit déphasage déterminée pour le centre (101, 105) de la cellule.

14. Procédé selon l'une quelconque des revendications précédentes, suivant lequel le composant optique (100) comprend une lentille, ou un film destiné à être appliqué sur un substrat transparent pour former une lentille.

15. Procédé selon la revendication 14, suivant lequel le composant optique (100) comprend un verre de lunettes ophtalmiques, ou un film destiné à être appliqué sur un substrat transparent pour former un verre de lunettes ophtalmiques.

## Patentansprüche

1. Verfahren zur Herstellung eines durchsichtigen optischen Bauteils (100) mit zellulärer Struktur, das angepasst ist, um einem Benutzer, der sich auf einer zweiten Seite des Bauteils befindet, die der ersten Seite entgegengesetzt ist und in einer zweiten Entfernung von dem Bauteil liegt, eine Sicht eines Objekts zu verleihen, das sich auf einer ersten Seite des Bauteils und in einer ersten Entfernung von dem Bauteil befindet, wobei das Bauteil ein Netzwerk von Wänden (106) umfasst, die eine Einheit von Zellen (104) bilden, die zwischen der ersten und zweiten Seite an eine Fläche (S₁) des Bauteils parallel angrenzt, und wobei sich jede Wand senkrecht zu der Fläche des Bauteils erstreckt, indem sie zwei benachbarte Zellen trennt, mit einer Wandstärke zwischen 0,1 µm und 5 µm parallel zu der Fläche des Bauteils, wobei das Verfahren den folgenden Schritt umfasst:
/1/ Bestimmen (401, 402) einer Einheit von Punkten (101, 105) in der Fläche (S₁) des Bauteils (100) mit einer unregelmäßigen Verteilung der Punkte in der Fläche, wobei jeder Punkt dazu bestimmt ist, eine Mitte einer der Zellen (104) zu bilden;
**dadurch gekennzeichnet, dass** es außerdem den folgenden zusätzlichen Schritt umfasst:
/2/ Bestimmen (403) einer Position und einer Ausrichtung jeder Wand (106) parallel zu der Fläche (S₁) des Bauteils (100) derart, dass das Netz der Wände eine Voronoi-Teilung der Fläche des Bauteils bildet, wobei die Voronoi-Teilung aus Vielecken besteht, die ausgehend von den Mitten der Zellen (104) gebaut sind, und derart, dass das Netz aus Wänden mindestens fünf Wände (106) enthält, die jeweilige unterschiedliche Ausrichtungen parallel zu der Fläche des Bauteils haben.

2. Verfahren nach Anspruch 1, gemäß dem die Einheit der Punkte (101, 105), die die Mitten der Zellen (104) bilden, bei dem Schritt /1/ derart bestimmt wird, dass ein Merkmal einer Winkelverteilung von Licht, das durch das Bauteil (100) diffundiert wird, mit den Wänden (106), die bei dem Schritt /2/ bestimmt werden, minimal oder kleiner ist als ein vorbestimmter Schwellenwert, wobei das diffundierte Licht ausgehend von einem parallelen Lichtstrahl, der das Bauteil beleuchtet, erzeugt wird.

3. Verfahren nach Anspruch 2, wobei das Merkmal der Winkelverteilung von diffundiertem Licht eine Amplitude eines Beugungsmaximums des Rangs eins (201, 301) ist.

4. Verfahren nach Anspruch 2 oder 3, gemäß dem die Punkte (101), die dazu bestimmt sind, die Mitten der Zellen (104) zu bilden, direkt bei dem Schritt /1/ mit einer unregelmäßigen Verteilung in der Fläche (S₁) des Bauteils (100) bestimmt werden.

5. Verfahren nach Anspruch 4, gemäß dem eine Dichte der unregelmäßigen Verteilung der Punkte (101) in der Fläche (S₁) des Bauteils (100) von einem Gradienten einer optischen Funktion, die dazu bestimmt ist, von dem Bauteil ausgeführt zu werden, abhängt.

6. Verfahren nach Anspruch 2 oder 3, gemäß dem der Schritt /1/ die folgenden Unterschritte umfasst:
/1-1/Auswählen (401) einer ersten unregelmäßigen Verteilung in der Fläche (S₁) des Bauteils (100) für die Punkte (101), die dazu bestimmt sind, die Mitten der Zellen (104) zu bilden; dann
/1-2/Verlagern (402) mindestens eines der Punkte (101), der dazu bestimmt ist, die Mitte einer der Zellen (104) zu bilden, in Bezug auf eine Ausgangsposition des Punkts in der ersten unregelmäßigen Verteilung derart, dass die unregelmäßige Verteilung für sämtliche Punkte (105), an die der Schritt /2/ angewandt wird, erzielt wird.

7. Verfahren nach Anspruch 6, gemäß dem eine Dichte der ersten unregelmäßigen Verteilung der Punkte (101) in der Fläche (S₁) des Bauteils (100), die bei Unterschritt /1-1/ ausgewählt wird, von einem Gradienten einer optischen Funktion, die dazu bestimmt ist, von dem Bauteil ausgeführt zu werden, abhängt.

8. Verfahren nach Anspruch 2 oder 3, gemäß dem der Schritt /1/ die folgenden Unterschritte umfasst:
/1-1/ Auswählen (401) einer regelmäßigen Verteilung in der Fläche (S₁) des Bauteils (100) für die Punkte (101), die dazu bestimmt sind, die Mitten der Zellen (104) zu bilden; dann
/1-2/ Verlagern (402) mindestens eines der Punkte (101), der dazu bestimmt ist, die Mitte einer der Zellen (104) zu bilden, in Bezug zu einer ursprünglichen Position des Punkts in der regelmäßigen Verteilung derart, dass die unregelmäßige Verteilung für sämtliche Punkte (105), an die der Schritt /2/ angewandt wird, erzielt wird.

9. Verfahren nach Anspruch 8, gemäß dem die regelmäßige Verteilung der Punkte (101) in der Fläche (S₁) des Bauteils (100), die bei dem Unterschritt /1-1/ ausgewählt wird, ein Maschenmuster besitzt, das aus einem quadratischen, rechteckigen, gleichseitig dreieckigen und sechseckigen Muster ausgewählt ist.

10. Verfahren nach Anspruch 8 oder 9, gemäß dem eine maximale Länge eines Verschiebungsvektors (103) jedes Punkts (101), der bei dem Unterschritt /1-2/ verlagert wird, zwischen 0,5 und 2,5 Mal eines Maschenparameters der regelmäßigen Verteilung, die bei Unterschritt /1-1/ ausgewählt wird, liegt.

11. Verfahren nach Anspruch 6 oder 8, gemäß dem ein Verschiebungsvektor (103) jedes Punkts (101), der bei dem Unterschritt /1-2/ verlagert wird, willkürlich oder pseudowillkürlich hinsichtlich einer Ausrichtung und einer Länge des Verschiebungsvektors parallel zu der Fläche (S₁) des Bauteils (100) bestimmt wird, wobei die Länge des Verschiebungsvektors außerdem durch die Fläche des Bauteils begrenzt ist.

12. Verfahren nach einem der vorhergehenden Ansprüche, das außerdem eine Füllung jeder Zelle (104) mit einer durchsichtigen Substanz umfasst, die einen variablen Brechungsindex hat, so dass mindestens bestimmte der Zellen variable Phasenverschiebungen für Lichtstrahlen, die die Zellen zwischen der ersten und zweiten Seite des Bauteils (100) durchqueren, erzeugen.

13. Verfahren nach Anspruch 12, gemäß dem das Füllen jeder Zelle (104) derart ausgeführt wird, dass die Phasenverschiebung, die von der Zelle erzeugt wird, einem Zielwert der Phasenverschiebung entspricht, der für die Mitte (101, 105) der Zelle bestimmt ist.

14. Verfahren nach einem der vorhergehenden Ansprüche, bei dem das optische Bauteil (100) eine Linse oder eine Folie umfasst, die dazu bestimmt ist, auf ein durchsichtiges Substrat aufgebracht zu werden, um eine Linse zu bilden.

15. Verfahren nach Anspruch 14, gemäß dem das optische Bauteil (100) ein Glas einer ophthalmischen Brille oder eine Folie umfasst, die dazu bestimmt ist, auf ein durchsichtiges Substrat aufgebracht werden, um ein ophthalmisches Brillenglas zu bilden.

## Claims

1. Process for producing a transparent optical component (100) having a cellular structure, said component being suitable for ensuring an object located on a first side of the component and at a first distance from said component is able to be seen by a user located on a second side of the component opposite the first side and at a second distance from said component, the component comprising a network of walls (106) forming a set of cells (104) that are juxtaposed parallelly to a surface (S₁) of the component, between the first and second sides, and each wall extending perpendicularly to the surface of the component and separating two adjacent cells, a wall thickness parallelly to the surface of the component being comprised between 0.1 µm and 5 µm, the process comprising the following step:
/1/ determining (401, 402) a set of points (101, 105) on the surface (S₁) of the component (100) with an irregular distribution of said points over said surface, each point being intended to form a centre of one of the cells (104);
and being **characterized in that** it furthermore comprises the additional step of:
/2/ determining (403) a position and an orientation of each wall (106), parallelly to the surface (S₁) of the component (100), so that the network of walls forms a Voronoi partition on said surface of the component, said Voronoi partition consisting of polygons constructed from the centres of the cells (104), and so that said network of walls contains at least five walls (106) that have different respective orientations parallelly to the surface of the component.

2. Process according to Claim 1, wherein the set of points (101, 105) forming the centres of the cells (104) is determined in step /1/ so that a characteristic of an angular distribution of light scattered by the component (100), with the walls (106) determined in step /2/, is minimal or lower than a preset threshold, said scattered light being produced from a parallel beam of light illuminating the component.

3. Process according to Claim 2, wherein the characteristic of the angular distribution of scattered light is an amplitude of a first order diffraction peak (201, 301) .

4. Process according to Claim 2 or 3, wherein the points (101) intended to form the centres of the cells (104) are directly determined in step /1/ with an irregular distribution over the surface (S₁) of the component (100).

5. Process according to Claim 4, wherein a density of the irregular distribution of the points (101) over the surface (S₁) of the component (100) depends on a gradient of an optical function intended to be provided by the component.

6. Process according to Claim 2 or 3, wherein step /1/ comprises the following substeps:
/1-1/ selecting (401) a first irregular distribution over the surface (S₁) of the component (100) for the points (101) intended to form the centres of the cells (104); then
/1-2/moving (402) at least one of the points (101), which point is intended to form the centre of one of the cells (104), with respect to an initial position of said point in the first irregular distribution, so as to obtain the irregular distribution for the set of points (105), to which distribution step /2/ is applied.

7. Process according to Claim 6, wherein a density of the first irregular distribution of the points (101) over the surface (S₁) of the component (100), which distribution is selected in substep /1-1/, depends on a gradient of an optical function intended to be provided by the component.

8. Process according to Claim 2 or 3, wherein step /1/ comprises the following substeps:
/1-1/ selecting (401) a regular distribution over the surface (S₁) of the component (100) for the points (101) intended to form the centres of the cells (104); then
/1-2/moving (402) at least one of the points (101), which point is intended to form the centre of one of the cells (104), with respect to an initial position of said point in the regular distribution, so as to obtain the irregular distribution for the set of points (105), to which distribution step /2/ is applied.

9. Process according to Claim 8, wherein the regular distribution of the points (101) over the surface (S₁) of the component (100), which distribution is selected in substep /1-1/, possesses a mesh pattern chosen from a square pattern, a rectangular pattern, an equilateral triangle pattern and a hexagonal pattern.

10. Process according to Claim 8 or 9, wherein a maximum length of a translation vector (103) of each point (101) that is moved in substep /1-2/ is comprised between 0.5 and 2.5 times a mesh parameter of the regular distribution selected in substep /1-1/.

11. Process according to Claim 6 or 8, wherein a translation vector (103) of each point (101) that is moved in substep /1-2/ is determined randomly or pseudo-randomly, as regards an orientation and a length of the translation vector parallelly to the surface (S₁) of the component (100), the length of said translation vector furthermore being limited by the extent of said surface of the component.

12. Process according to any one of the preceding claims, furthermore comprising filling each cell (104) with a transparent substance having a variable refractive index, so that at least some of the cells produce variable phase shifts in light rays that pass through said cells between the first and second side of the component (100).

13. Process according to Claim 12, wherein each cell (104) is filled so that the phase shift produced by said cell corresponds to a target value for said phase shift, which value is determined for the centre (101, 105) of the cell.

14. Process according to any one of the preceding claims, wherein the optical component (100) comprises a lens, or a film intended to be applied to a transparent substrate to form a lens.

15. Process according to Claim 14, wherein the optical component (100) comprises an eyeglass of a pair of ophthalmic spectacles, or a film intended to be applied to a transparent substrate to form an eyeglass of a pair of ophthalmic spectacles.
